# FASCICULE DE BREVET EUROPEEN

(11) **EP 3 716 086 B1**
(45) Date de publication et mention de la délivrance du brevet: **26.04.2023**
(21) Numéro de dépôt: 20151450.2
(22) Date de dépôt: 13.01.2020
(51) Int. Cl.: G06F 13/28

(54) **ACCÈS DIRECT EN MÉMOIRE**
DIREKTER SPEICHERZUGANG
DIRECT MEMORY ACCESS

(30) Priorité: 29.03.2019 FR 1903407
(43) Date de publication de la demande: 30.09.2020
(73) Titulaire: STMicroelectronics (Grenoble 2) SAS, 38000 Grenoble (FR)
(72) Inventeur: CLOUTE, François, 38500 COUBLEVIE (FR); TABA, Christophe, 38130 ECHIROLLES (FR)
(74) Mandataire: Cabinet Beaumont

(56) Documents cités:
- US-A1- 2001 049 755
- US-A1- 2012 287 337
- Texas Instruments: "TMS320C6474 DSP Enhanced DMA (EDMA3) Controller User's Guide", , 1 October 2008 (2008-10-01), XP055772306, Retrieved from the Internet: URL:https://www.ti.com/lit/ug/sprug11b/spr ug11b.pdf?ts=1612433720715&ref_url=https%2 53A%252F%252Fwww.google.com%252F [retrieved on 2021-02-04]

## Description

### Domaine technique

La présente description concerne de façon générale les systèmes électroniques, et plus particulièrement les systèmes électroniques mettant en oeuvre des transferts de données par accès direct en mémoire (DMA - Direct Memory Access).

### Technique antérieure

L'accès direct en mémoire est un procédé généralement mis en oeuvre par un circuit d'accès direct en mémoire permettant, dans un système électronique, des transferts de données entre des éléments (périphérique, mémoire) du système sans intervention d'une unité centrale de traitement (CPU - Central Processing Unit) si ce n'est pour initialiser et conclure une succession de cycles de transfert. Les paramètres de la succession de cycles de transfert sont déterminés par une liste chaînée d'éléments ou d'enregistrements ("Linked List Item"), enregistrée dans une mémoire du système. Chaque élément détermine alors les paramètres d'un ou plusieurs transferts de données d'un cycle de transfert correspondant de cette succession de cycles de transfert. US2012287337 décrit un procédé dans lequel des informations vidéo sont transférées au processeur vidéo par le moteur DMA en analysant une liste chaînée de descripteurs qui définissent une configuration run time. Une interruption est générée après que le moteur DMA ait traité la liste chaînée de descripteurs puis le moteur DMA est calé. La liste chaînée peut être modifiée par une application exécutée sur le processeur tandis que le moteur DMA est calé pour mettre à jour la configuration run time. Une application exécutée sur le processeur affirme ensuite un événement pour déclencher le moteur DMA afin de traiter la liste chaînée modifiée de descripteurs.

### Résumé de l'invention

Un mode de réalisation de l'invention est indiqué dans les revendications indépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et sous forme de blocs, un mode de réalisation d'un système électronique du type auquel s'appliquent, à titre d'exemple, les modes de réalisation décrits ;
la figure 2 est un organigramme illustrant un mode de réalisation d'un procédé de transfert par accès direct en mémoire ;
la figure 3 illustre un mode de mise en oeuvre du procédé de la figure 2 qui ne fait pas partie de l'objet de la protection demandée ;
la figure 4 illustre un autre mode de mise en oeuvre du procédé de la figure 2 qui ne fait pas partie de l'objet de la protection demandée ; et
la figure 5 illustre un autre mode de mise en oeuvre du procédé de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les détails de mise en oeuvre d'un transfert de données via un canal de transfert de données d'un circuit d'accès direct en mémoire, notamment en ce qui concerne la gestion des requêtes d'accès à un bus ou à une mémoire, et les acquittements de ces requêtes, n'ont pas été décrits, les modes de réalisation décrits étant compatibles avec les transferts de données par accès direct en mémoire usuels. En outre, les divers paramètres couramment utilisés pour définir un ou plusieurs transferts de données réalisés lors d'un cycle de transfert de données sur un canal d'un circuit d'accès direct en mémoire n'ont pas été détaillés, les modes de réalisation décrits étant compatibles avec ces paramètres usuels. De plus, les divers systèmes électroniques dans lesquels un circuit d'accès direct en mémoire est prévu n'ont pas été détaillés, les modes de réalisation décrits étant compatibles avec ces systèmes électroniques usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

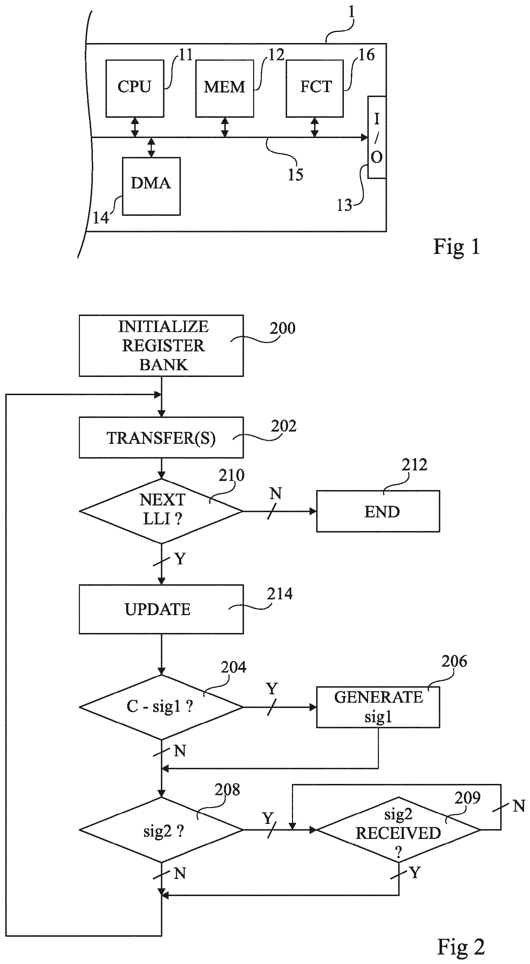

La figure 1 représente, de façon très schématique et sous forme de blocs, un mode de réalisation d'un circuit ou système électronique 1 du type auquel s'appliquent, les modes de réalisation qui vont être décrits.

Le système électronique 1 comporte :
- une unité centrale de traitement 11 (CPU), par exemple une machine d'états, un microprocesseur, un circuit logique programmable, etc. ;
- une ou plusieurs mémoires parmi lesquelles au moins une mémoire vive 12 (MEM), par exemple de type SRAM ;
- au moins une interface d'entrée-sortie 13 (I/O) de communication, par exemple de type bus série, avec l'extérieur du système 1 ;
- un circuit d'accès direct en mémoire 14 (DMA) ; et
- un ou plusieurs bus de données, d'adresses et/ou de commandes entre les différents éléments internes au système 1, représentés ici sous la forme d'un unique bus 15.

Par ailleurs, le système 1 peut intégrer d'autres fonctions, symbolisées par un bloc 16 (FCT), selon l'application, par exemple, un processeur dédié au traitement d'images, d'autres interfaces, d'autres mémoires, etc.

Le système 1 est configuré pour exécuter diverses applications telles que du traitement d'images, de l'encodage et/ou du décodage vidéo, du traitement de données provenant d'un capteur, etc... Ces applications requièrent des transferts de données, par l'intermédiaire du bus 15, entre des éléments internes au système 1. Afin de fluidifier le fonctionnement du système 1 et de réduire la charge de l'unité centrale 11, ces transferts de données sont effectués par accès direct en mémoire, par l'intermédiaire du circuit 14.

Dans ce mode de réalisation, le circuit 14 comprend plusieurs canaux de transfert de données et, pour chaque canal, une banque de registres de configuration du canal. Chaque canal du circuit 14 permet de réaliser des cycles de transfert de données entre deux éléments (circuit et/ou mémoire) du système 1. Chaque cycle comprend un ou plusieurs transfert de données dont les paramètres sont déterminés par le contenu courant de la banque de registres de configuration, et une mise à jour de la banque de registres pour obtenir les paramètres du ou des transferts de données du cycle suivant. Lors du dernier cycle de transfert, la mise à jour de la banque de registres de configuration peut être omise. En outre, le transfert de données d'un cycle de transfert peut correspondre à un transfert nul où aucune donnée n'est transférée.

Lorsqu'une application doit être exécutée par le système 1, l'unité centrale 11 alloue un canal du circuit 14 à l'application. Pour cela, l'unité centrale 11 programme, ou initialise, la banque de registres de configuration d'un canal libre du circuit 14, c'est-à-dire un canal qui n'est pas déjà alloué à une application, de sorte que le circuit 14 réserve ce canal à l'application. Une fois que l'unité centrale de traitement 11 a programmé la banque de registres de configuration du canal, plusieurs cycles de transfert de données de l'application sont réalisés successivement sur le canal.

La figure 2 est un organigramme illustrant, sous forme de blocs, un mode de réalisation d'un procédé de transfert de données par accès direct en mémoire, par exemple mis en oeuvre par le système 1 de la figure 1.

A une étape initiale 200 (bloc "INITIALIZE REGISTER BANK"), un canal du circuit 14 est attribué à une application en programmant la banque de registres de configuration associée à ce canal. Cette programmation est réalisée par l'unité centrale 11.

Plus particulièrement, à l'étape 200, un premier champ C-@ de la banque de registres est programmé avec une information représentative d'une adresse dans une mémoire du système 1, de préférence une adresse dans la mémoire 12 du système 1. Cette adresse correspond à l'adresse mémoire où est enregistré le premier élément d'une liste chaînée d'éléments, c'est-à-dire l'élément initial de la liste. Les autres éléments de la liste sont eux aussi enregistrés dans la mémoire. La liste chaînée définit une succession correspondante de cycles de transfert de l'application. En pratique, une liste chaînée d'éléments est une liste chaînée de structures de données. Dans les modes de réalisation décrits, chaque élément d'une liste chaînée d'éléments est représentatif d'une mise à jour de la banque de registres de configuration du canal. Chaque élément d'une liste chaînée d'éléments détermine l'adresse en mémoire de l'élément suivant de la liste. De plus, chaque élément d'une liste chaînée d'éléments détermine les paramètres du ou des transferts de données d'un cycle de transfert correspondant à cet élément.

De plus, lors de l'étape 200, l'unité centrale 11 programme un deuxième champ C-sig1 de la banque de registres associée au canal. La fonction de ce champ C-sig1 sera décrite en relation avec une étape suivante du procédé.

En outre, à l'étape 200, des troisièmes champs C-param de la banque de registres sont programmés par l'unité centrale 11. Les champs C-param sont représentatifs des paramètres du ou des transferts de données du prochain cycle de transfert de données mis en oeuvre sur le canal. A titre d'exemple, les paramètres du ou des transferts de données d'un cycle de transfert comprennent une indication que ce ou ces transferts de données concernent des données ou des blocs de données, une indication de l'adresse de début d'une plage d'adresses d'une source où sont stockés les données ou les blocs de données à transférer, une indication de l'adresse de début d'une plage d'adresses d'une destination où doivent être copiés les données ou les blocs de données transférés, une indication du nombre de données ou de blocs de données à transférer, une indication de la taille des données, une indication du nombre de données par blocs, une indication d'un décalage d'adresses entre deux données successives ou entre deux blocs successifs à transférer, etc. Ainsi, chaque élément d'une liste chaînée d'éléments, et donc chaque cycle de transfert mis en oeuvre sur un canal, peut correspondre par exemple au transfert d'une ou plusieurs données ou d'un ou plusieurs blocs de données entre une source et une destination.

De préférence, la programmation de la banque de registres par l'unité centrale 11 ne peut être effectuée que lorsque le canal correspondant est dans un état désactivé, ou, autrement dit, dans un état non alloué. L'état alloué ou non d'un canal est déterminé par le circuit 14.

La banque de registres associée au canal peut comprendre d'autres champs que ceux décrits ci-dessus.

A la fin de l'étape d'initialisation 200, l'unité centrale 11 fournit un signal d'activation au circuit 14. Quand le circuit 14 reçoit ce signal d'activation, il place le canal dans un état actif, ou, autrement dit, dans un état alloué.

Le procédé se poursuit à une étape 202 suivante (bloc "TRANSFER(S)") marquant par exemple le début d'un cycle de transfert. A l'étape 202, le circuit 14 effectue, sur le canal alloué, le ou les transferts de données paramétrés par le contenu courant de la banque de registres du canal, en particulier par les champs C-param de la banque de registres.

A une étape 210 suivante (bloc "NEXT LLI ?"), le circuit 14 détermine à partir du contenu de la banque de registres si le cycle de transfert courant est le dernier cycle de transfert de l'application. A titre d'exemple, lorsque le champ C-@ de la banque de registres est à une valeur nulle, par exemple quand le ou les bits constitutifs de ce champ C-@ sont tous à '0', cela signifie que le cycle de transfert courant est le dernier de l'application.

Dans le cas où le cycle de transfert courant est le dernier de l'application (sortie N du bloc 210), à une étape suivante 212 (bloc "END"), le circuit 14 libère, ou désactive, le canal et génère un signal à destination de l'unité centrale lui indiquant que le canal est libre. Le procédé est alors terminé. Le procédé peut être à nouveau mis en oeuvre en allouant, à une nouvelle étape 200, le canal à une application.

Dans le cas où l'application comprend des cycles de transfert suivants (sortie Y du bloc 210), par exemple quand le champ C-@ est à une valeur non nulle indiquant l'adresse en mémoire d'un élément correspondant à une mise à jour de la banque de registres, à une étape 214 suivante (bloc "UPDATE"), la banque de registres est mise à jour à partir de cet élément.

A une étape 204 suivante (bloc "C-sig1 ?"), le circuit 14 lit le champ C-sig1 de la banque de registres, c'est-à-dire le contenu courant du champ C-sig1. Le champ C-sig1 est représentatif d'une indication que le circuit 14 doit ou non générer un signal sig1. A titre d'exemple, le champ C-sig1 et/ou un ou plusieurs autres champs de la banque de registres indiquent en outre quel est le signal sig1 qui doit être généré et/ou à quel moment du cycle de transfert courant ce signal sig1 doit être généré.

Si le champ C-sig1 indique qu'aucun signal sig1 ne doit être généré (sortie N du bloc 204), le procédé se poursuit à une étape 208 suivante (bloc "sig2 ?").

Si le champ C-sig1 indique qu'un signal sig1 doit être généré (sortie Y du bloc 204), le procédé se poursuit à une étape 206 suivante (bloc "GENERATE sig1"). A l'étape 206, le circuit 14 génère le signal sig1. Après l'étape 206, le procédé se poursuit à l'étape 208.

A l'étape 208, le circuit 14 vérifie, par exemple sur la base du contenu de la banque de registres lu à l'étape 204, si un signal sig2 doit être reçu par le circuit 14 avant de poursuivre l'exécution des cycles de transfert sur le canal.

Si aucun signal sig2 ne doit être reçu avant de poursuivre l'exécution des cycles de transfert (sortie N du bloc 208), le procédé se poursuit à l'étape 202, marquant par exemple le début d'un nouveau cycle de transfert. A cette étape 202, le circuit 14 effectue, sur le canal alloué, le ou les transferts de données paramétrés par le contenu courant de la banque de registres du canal, par exemple mis à jour à partir d'un élément d'une liste chaînée d'éléments lors de la dernière étape 214.

Si un signal sig2 doit être reçu avant de poursuivre l'exécution des cycles de transfert sur le canal, le procédé se poursuit à une étape 209 (bloc "sig2 RECEIVED ?"). A l'étape 209, le circuit 14 vérifie s'il reçoit le signal sig2. Tant que le signal sig2 n'est pas reçu (sortie N du bloc 209), l'étape 209 est répétée. Lorsque le signal sig2 est reçu (sortie Y du bloc 209), le procédé se poursuit à l'étape 202.

La prévision des signaux sig1 et sig2 permet de suspendre, sur un canal, l'exécution des cycles de transfert d'une application jusqu'à la réception du signal sig2 par le circuit 14.

On prévoit ici, qu'à au moins certains cycles de transfert, le signal sig1 soit généré à destination de l'unité centrale 11, et que après avoir reçu le signal sig1, l'unité centrale 11 modifie ou non, en fonction de l'état du système 1, les cycles de transfert suivants prévus sur le canal. L'unité centrale génère ensuite, ou déclenche la génération, du signal sig2 pour que l'exécution des cycles de transfert se poursuive sur le canal. A titre d'exemple, l'unité centrale 11 détermine l'état du système 1 au moyen du contenu d'un ou plusieurs registres d'états et/ou de la réception d'un ou plusieurs signaux d'interruption provenant de divers éléments du système et/ou de périphériques connectés au système 1.

Plus particulièrement, lorsque l'unité centrale reçoit le signal sig1 et détermine que les cycles de transfert suivants sur le canal doivent être modifiés, l'unité centrale 11 modifie le contenu de la banque de registres de configuration et/ou enregistre dans la mémoire un élément représentatif d'une mise à jour suivante de la banque de registres. Cette modification du contenu de la banque de registres et/ou l'adresse à laquelle est enregistré cet élément sont telles qu'un ou plusieurs cycles de transfert différents de ceux prévus seront alors mis en oeuvre sur le canal.

De préférence, lorsque l'unité centrale 11 enregistre un élément représentatif d'une mise à jour de la banque de registres et/ou modifie tout ou partie du contenu de la banque de registres pour qu'un ou plusieurs cycles de transfert suivants différents des cycles de transfert prévus soient mis en oeuvre, plusieurs éléments correspondant à plusieurs mises à jour successives de la banque de registres sont enregistrés en mémoire. Ces éléments sont alors enregistrés sous la forme d'une liste chaînée correspondant aux futurs cycles de transfert de l'application à mettre en oeuvre sur le canal.

Le procédé de la figure 2 permet donc, au moyen des signaux de synchronisation que sont les signaux sig1 généré et sig2 reçu par le circuit 14, lors de l'exécution d'une même application, de ne pas exécuter des futurs cycles de transfert initialement prévus, et de les remplacer par d'autres futurs cycles de transfert. Ainsi, lors de l'exécution d'une même application, on peut prévoir au moins deux futurs, ou branches, possibles en ce qui concerne l'exécution des transferts de données de l'application. Le choix de l'un ou l'autre de ces futurs est effectué par l'unité centrale 11, pendant l'étape 209, en fonction de l'état du système 1. La possibilité de prévoir plusieurs exécutions possibles en ce qui concerne les cycles de transfert d'une application et de choisir entre ces exécutions possibles en fonction de l'état du système 1 permet d'adapter l'exécution de l'application à l'état du système.

Bien que cela ne soit pas détaillé ici, de préférence, chaque exécution possible d'une application est connue à l'avance, et est par exemple déterminée, ou définie, dans un programme d'initialisation ("boot") du système 1, ce programme d'initialisation étant par exemple le premier programme exécuté par le système lorsque le système 1 est mis sous tension ou réinitialisé.

Selon des modes de mise en oeuvre, le signal sig1 est le même pour tous les cycles de transfert où un signal sig1 est généré, et ce signal sig1 est alors généré à destination de l'unité centrale 11. Dans ce cas, à chaque fois que le signal sig1 est généré, un même signal sig2 doit être fourni par l'unité centrale 11 et reçu par le circuit 14 avant de poursuivre l'exécution des cycles de transfert. Dans ces modes de mise en oeuvre, la lecture du champ C-sig1 par le circuit 14 permet donc de déterminer si l'étape 209 doit ou non être mise en oeuvre, et également quel est le signal sig2 attendu à cette étape. Dans de tels modes de mise en oeuvre, l'étape 208 peut être réalisée simultanément à l'étape 204, l'étape 209 étant alors mise en oeuvre directement après l'étape 206.

Selon d'autres modes de mise en oeuvre, la banque de registres comprend un champ C-sig2 indiquant si un signal sig2 doit ou non être reçu pendant le cycle de transfert courant avant de poursuivre l'exécution des cycles de transfert sur le canal. Dans ce cas, le champ C-sig2 et/ou un ou plusieurs autres champs de la banque de registres peuvent indiquer à quel moment du cycle courant doit être reçu le signal sig2 et/ou quel est le signal sig2 qui doit être reçu.

Plus généralement, l'ordre et/ou le nombre des étapes du procédé de la figure 2 peuvent être modifiés. Par exemple, l'étape 210 et les étapes 212 et 214 qui lui sont associées, peuvent être prévues après les étapes 204 et 208 et les étapes 206 et 209 qui leurs sont associées. Selon un autre exemple, les étapes 204 et 208 et les étapes 206 et 209 qui leurs sont associées peuvent être prévues avant l'étape 202 de transfert. L'ordre des étapes susmentionnées est par exemple déterminé par le champ C-sig1 et/ou par un ou plusieurs autres champs de la banque de registres qui indiquent à quel moment du cycle de transfert courant doit éventuellement être généré le signal sig1, par exemple avant ou après l'étape 214 de mise à jour de la banque de registres. L'ordre des étapes susmentionnées est par exemple également déterminé par le champ C-sig2 et/ou par un ou plusieurs autres champs de la banque de registres qui indiquent à quel moment du cycle de transfert courant doit éventuellement être reçu le signal sig2.

Bien que cela n'ait pas été décrit ci-dessus, on peut prévoir qu'un cycle de transfert courant soit répété. Par exemple, la banque de registres peut comprendre un champ indiquant que le ou les transferts de données du cycle de transfert courant doivent être répétés. Dans ce cas, lorsqu'un cycle de transfert courant est répété, l'étape 214 peut être omise. Selon un autre exemple, pour répéter un cycle de transfert, le champ C-@ de la banque de registres contient l'adresse en mémoire de l'élément correspondant à la dernière mise à jour de la banque de registres, c'est-à-dire que cet élément pointe sur lui-même. Dans ce cas, les mises à jour suivantes de la banque de registres sont réalisées à partir de cet élément, tant que le champ C-@ n'est pas modifié pour indiquer une adresse autre que celle de cet élément.

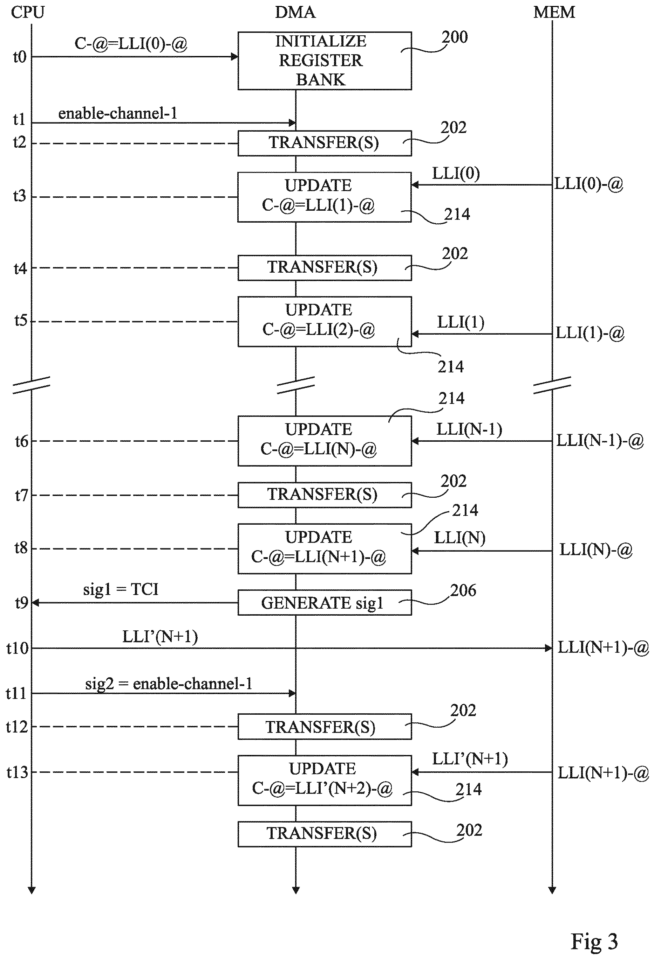

Différents modes de mise en oeuvre du procédé ci-dessus vont maintenant être décrits plus en détail en relation avec les figures 3, 4, 5 et 6.

La figure 3 illustre un exemple d'un premier mode de mise en oeuvre du procédé de la figure 2, qui ne fait pas partie de l'objet de la protection demandée. Dans cet exemple par le système 1 de la figure 1, et plus particulièrement sur un canal channel-1 du circuit 14 (DMA).

Dans ce premier mode de mise en oeuvre, pour modifier des cycles de transfert suivants, l'unité centrale 11 lit le champ C-@ pour obtenir l'adresse d'un élément suivant d'une liste chaînée d'éléments correspondant à la succession de cycles de transfert en cours d'exécution sur un canal, puis l'unité centrale 11 programme (enregistre), à cette adresse, un nouvel élément, par exemple le premier élément d'une nouvelle liste chaînée d'éléments qui est alors également enregistrée en mémoire.

Dans cet exemple, le signal sig1 est le même pour tous les cycles de transfert où un signal sig1 est généré, ce signal sig1 étant généré à destination de l'unité centrale 11. En outre, dans cet exemple, à chaque fois que le signal sig1 est généré, un même signal sig2 fourni par l'unité centrale 11 est attendu par le circuit 14. Dans cet exemple, la banque de registres ne comprend pas de champ C-sig2, l'étape 208 étant alors réalisée simultanément à l'étape 204 et l'étape 209 étant réalisée directement après l'étape 206.

A un instant t0, l'unité centrale 11 (CPU) initialise la banque de registres du canal channel-1 (étape 200). En particulier, l'unité centrale 11 programme le champ C-@ de la banque de registres de sorte que son contenu soit représentatif de l'adresse LLI(0)-@ de la mémoire 12 (MEM). L'adresse LLI(0)-@ correspond à l'adresse, dans la mémoire 12, d'un premier élément LLI(0) d'une première liste chaînée d'éléments LLI enregistrée dans la mémoire 12.

A un instant t1 suivant, l'unité centrale 11 fournit un signal enable-channel-1 au circuit 14 qui active alors le canal channel-1.

Le circuit 14 effectue alors, à partir d'un instant suivant t2, le ou les transferts de données paramétrés par le contenu courant de la banque de registres associée au canal channel-1 (étape 202). Ce transfert de données du premier cycle de transfert de l'application est par exemple un transfert nul.

Le circuit 14 vérifie ensuite, à partir du contenu de la banque de registres, si le cycle de transfert courant est le dernier de l'application (étape 210 non illustrée en figure 3), par exemple après une lecture du champ C-@ de la banque de registres. Dans cet exemple, le cycle de transfert courant n'est pas le dernier cycle de transfert de l'application.

A un instant suivant t3, le circuit 14 met alors à jour la banque de registres (étape 214) à partir de l'élément LLI(0) lu dans la mémoire 12, à l'adresse LLI(0)-@ indiquée par le champ C-@. Dans cet exemple, après l'étape 214, le champ C-@ de la banque de registres indique l'adresse LLI(1)-@ en mémoire 12 de l'élément LLI (1) suivant de la première liste LLI ("C-@=LLI(1)-@").

Après l'étape 214, le circuit 14 lit le champ C-sig1 pour déterminer s'il doit générer le signal sig1 (étape 204 non illustrée en figure 3). A titre d'exemple, on considère ici que l'exécution des cycles de transfert correspondant aux éléments de la première liste LLI est effectuée sans interruption jusqu'au cycle de transfert correspondant à l'élément LLI(N) de cette première liste. Autrement dit, dans cet exemple, aucun signal sig1 n'est généré par le circuit 14 et aucun signal sig2 n'est attendu par le circuit 14 avant le cycle de transfert correspondant à l'élément LLI(N) de la liste LLI.

Ainsi, à un instant t4 suivant, le circuit 14 effectue, sur le canal channel-1, le ou les transferts de données (étape 202) paramétrés par le contenu courant de la banque de registres, c'est-à-dire ici, par l'élément LLI(0) de la première liste LLI.

A un instant t5 suivant, après avoir déterminé que le cycle de transfert courant n'est pas le dernier de l'application (étape 210 non illustrée), le circuit 14 met à jour la banque de registres du canal channel-1 (étape 214), à partir de l'élément LLI(1) lu dans la mémoire 12, à l'adresse LLI(1)-@ indiquée par le champ C-@. Après cette mise à jour, le champ C-@ de la banque de registres indique l'adresse LLI(2)-@ de l'élément suivant LLI (2) dans la mémoire 12 ("C-@=LLI(2)-@").

Plusieurs cycles de transfert sont ainsi mis en oeuvre successivement jusqu'à un instant t6.

A l'instant t6, après avoir déterminé que le cycle de transfert courant n'est pas le dernier de l'application (étape 210 non illustrée), le circuit 14 met à jour la banque de registres (étape 214) associée au canal channel-1 à partir de l'élément LLI(N-1) lu à l'adresse LLI(N-1)-@ indiquée par le champ C-@. Après l'étape 214, le champ C-@ de la banque de registres indique l'adresse LLI(N)-@ de l'élément suivant LLI(N) de la première liste LLI ("C-@=LLI(N)-@").

A partir d'un instant t7 suivant, après avoir déterminé qu'aucun signal sig1 ne doit être généré et qu'aucun signal sig2 ne doit être reçu pour le cycle de transfert courant (étape 204 non illustrée), le circuit 14 effectue le ou les transferts de données (étape 202) paramétrés par le contenu courant de la banque de registres, c'est-à-dire par l'élément LLI(N-1) de la première liste LLI dans cet exemple.

A un instant t8 suivant, après avoir déterminé que le cycle de transfert courant n'est pas le dernier de l'application (étape 210 non illustrée), le circuit 14 met à jour la banque de registres (étape 214) à partir de l'élément LLI(N) enregistré à l'adresse LLI(N)-@ indiqué par le champ C-@. Après cette étape 214, le champ C-@ de la banque de registres du canal channel-1 indique l'adresse LLI(N+1)-@ de l'élément suivant LLI(N+1) de la première liste LLI ("C-@=LLI(N+1)-@").

Après l'étape 214, le circuit 14 détermine, à partir du contenu courant du champ C-sig1 de la banque de registres, s'il doit générer le signal sig1 à destination de l'unité centrale 11 (étape 204 non illustrée) avant de poursuivre l'exécution des cycles de transfert sur le canal. Dans cet exemple, le signal sig1 doit être généré par le circuit 14, et l'exécution des cycles de transfert est suspendue jusqu'à la réception du signal sig2. Autrement dit, le circuit 14 détermine, à partir du champ C-sig1, que l'exécution des cycles de transfert doit être interrompue.

Ainsi, à un instant t9 suivant, le circuit 14 génère un signal sig1 (étape 206), à destination de l'unité centrale 11. De préférence, le signal sig1 correspond à un signal TCI ("Tranfert Complete Interrupt") d'interruption.

Après avoir reçu le signal sig1, l'unité centrale 11 détermine, en fonction de l'état du système 1, si les prochains cycles de transfert à mettre en oeuvre sont ceux correspondants à la première liste LLI ou non. Dans cet exemple, on considère que les prochains cycles de transfert ne sont pas ceux déterminés par la première liste LLI.

Ainsi, à un instant t10 suivant, l'unité centrale 11 enregistre un nouvel élément LLI'(N+1) à l'adresse LLI(N+1)-@ indiquée par le champ C-@ de la banque de registres. A titre d'exemple, l'unité centrale récupère l'adresse LLI(N+1)-@ lors d'une lecture du champ C-@ de la banque de registres. De préférence, l'unité centrale 11 enregistre en mémoire 12 une deuxième liste chaînée d'éléments LLI' dont le premier élément correspond à l'élément LLI' (N+1), par exemple une deuxième liste représentative des cycles de transfert suivants à mettre en oeuvre sur le canal channel-1.

A un instant t11 suivant, l'unité centrale génère le signal sig2, de préférence le même signal enable-channel-1 qu'à l'instant t1.

Après avoir reçu le signal sig2 (étape 209 non illustrée), le circuit 14 reprend l'exécution des cycles de transfert sur le canal channel-1.

Ainsi, à un instant t12 suivant le ou les transferts de données paramétrés par le contenu courant de la banque de registres, c'est-à-dire ici par l'élément LLI(N) de la première liste chaînée d'éléments, sont effectués par le circuit 14 (étape 202).

A un instant t13 suivant, après avoir déterminé que le cycle de transfert courant n'est pas le dernier de l'application (étape 210 non illustrée), le circuit 14 met à jour la banque de registres associée au canal channel-1 (étape 214), à partir de l'élément LLI' (N+1) enregistré dans la mémoire 12, à l'adresse LLI(N+1)-@ indiquée par le champ C-@. Dans l'exemple représenté, après cette mise à jour, le champ C-@ de la banque de registres du canal channel-1 indique l'adresse LLI' (N+2)-@ de l'élément suivant LLI' (N+2) de la deuxième liste LLI' ("C-@=LLI'(N+2)-@").

Il en résulte que des cycles de transfert suivants sur le canal channel-1 ne sont plus déterminés par la première liste LLI, mais par l'élément LLI' (N+1) et, de préférence, par la deuxième liste LLI' dont le premier élément est l'élément LLI'(N+1).

Dans ce premier mode de mise en oeuvre, l'unité principale 11 ne modifie pas le contenu de la banque de registres associée au canal channel-1 pour modifier l'exécution, sur le canal channel-1, des cycles de transfert d'une application. Ainsi, il n'est pas utile que le circuit 14 désactive le canal channel-1 lors de l'étape 206, et qu'il le réactive lors de la réception du signal sig2 correspondant.

Bien que cela n'ait pas été illustré en figure 3, dans le cas où, après avoir reçu le signal sig1 (instant t9), l'unité centrale 11 détermine, en fonction de l'état du système 1, que les prochains cycles de transfert à mettre en oeuvre sont ceux de la première liste LLI, l'unité centrale 11 génère alors directement le signal sig2, sans modifier le contenu de la mémoire 12.

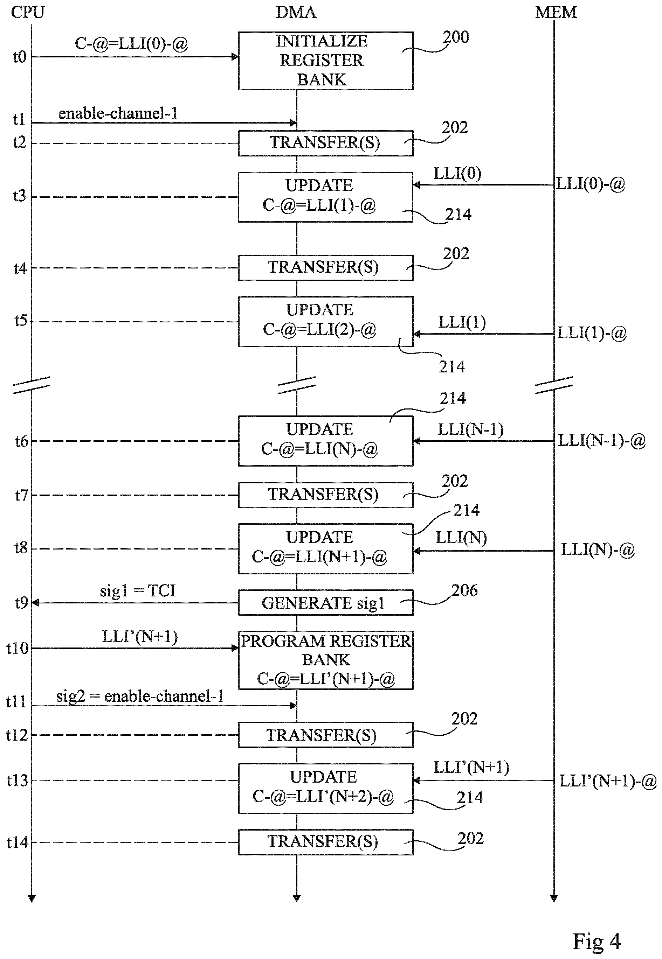

La figure 4 illustre un exemple d'un deuxième mode de mise en oeuvre du procédé de la figure 2, qui ne fait pas partie de l'objet de la protection demandée, par le système 1 de la figure 1.

Dans ce deuxième mode de mise en oeuvre, pour modifier des cycles de transfert suivants correspondant à une première liste chaînée d'éléments enregistrée en mémoire, l'unité centrale 11 programme directement la banque de registres à partir d'un nouvel élément. De préférence, ce nouvel élément est le premier élément d'une deuxième liste dont les éléments, à l'exception du premier élément, sont alors enregistrés en mémoire, de préférence juste avant ou juste après que l'unité centrale ait programmé la banque de registres avec le premier élément de la deuxième liste.

Dans cet exemple, le signal sig1 est le même pour tous les cycles de transfert où il est généré, ce signal sig1 étant généré à destination de l'unité centrale 11. En outre, dans cet exemple, à chaque fois que le signal sig1 est généré, un même signal sig2 fourni par l'unité centrale 11 est attendu par le circuit 14. Dans cet exemple, la banque de registres ne comprend pas de champ C-sig2, l'étape 208 étant alors réalisée simultanément à l'étape 204 et l'étape 209 étant réalisée directement après l'étape 206.

Seules les différences entre les figures 3 et 4 sont ici détaillées.

Comme en figure 3, après l'instant t8 et après avoir déterminé que le signal sig1, ici le signal d'interruption TCI, doit être généré par le circuit 14 et que l'exécution des cycles de transfert doit être suspendue jusqu'à la réception du signal sig2, à l'instant t9, le circuit 14 génère le signal sig1 (étape 206). Dans ce deuxième mode de mise en oeuvre, le circuit 14 désactive en outre le canal channel-1 de sorte que l'unité centrale puisse programmer tout ou partie du contenu de la banque de registres.

Après avoir reçu le signal sig1, l'unité centrale 11 détermine, en fonction de l'état du système 1, si les prochains cycles de transfert à mettre en oeuvre sont ceux correspondants à la première liste LLI ou non. Dans cet exemple, on considère, comme en figure 3, que les prochains cycles de transfert ne sont pas ceux déterminés par la première liste LLI.

Ainsi, à l'instant t10 suivant, l'unité centrale 11 programme directement le contenu de la banque de registres à partir d'un élément LLI'(N) (bloc "PROGRAM REGISTER BANK"), sans l'enregistrer en mémoire 12.

De préférence, l'élément LLI'(N) est le premier élément d'une deuxième liste chaînée d'éléments LLI'. Les éléments suivants de la liste LLI' sont alors enregistrés en mémoire, et le champ C-@ est programmé, par l'unité centrale 11 et à partir de l'élément LLI'(N), pour indiquer l'adresse LLI'(N+1)-@ de l'élément LLI'(N+1) suivant de la liste LLI' comme cela est représenté en figure 4 ("C-@=LLI'(N+1)-@").

A l'instant suivant t11, l'unité centrale 11 génère le signal sig2 (enable-channel-1). Lorsqu'il reçoit le signal sig2, le circuit 14 active, ou plus exactement réactive, le canal channel-1.

A l'instant t12 suivant, le circuit 14 effectue le ou les transferts de données paramétrés par le contenu courant de la banque de registres (étape 202), c'est-à-dire ici par l'élément LLI'(N) programmé directement dans la banque de registres à l'instant t10.

Après ce ou ces transferts, et après avoir déterminé que le cycle de transfert courant n'est pas le dernier cycle de transfert de l'application (étape 210 non illustrée), à l'instant t13, le circuit met à jour la banque de registres (étape 214), à partir de l'élément LLI'(N+1) enregistré à l'adresse LLI'(N+1)-@ indiquée par le champ C-@ de la banque de registres. Dans l'exemple représenté, après cette mise à jour, le champ C-@ de la banque de registres du canal channel-1 indique l'adresse LLI'(N+2)-@ de l'élément suivant LLI'(N+2) de la deuxième liste LLI' ("C-@=LLI'(N+2)-@").

A un instant t14 suivant, après avoir déterminé, dans cet exemple, qu'aucun signal sig1 ne doit être généré et qu'aucun signal sig2 ne doit être reçu pour le cycle de transfert courant (étapes 204 et 208 non illustrées), le circuit 14 effectue le ou les transferts de données (étape 202) paramétrés par le contenu courant de la banque de registres, c'est-à-dire ici par l'élément LLI' (N+1) de la deuxième liste LLI'.

Bien que cela n'ait pas été illustré en figure 4, dans le cas où, après avoir reçu le signal sig1 (instant t9), l'unité centrale 11 détermine, en fonction de l'état du système 1, que les prochains cycles de transfert à mettre en oeuvre sont ceux de la première liste LLI, l'unité centrale 11 génère alors directement le signal sig2, sans modifier le contenu de la banque de registres.

Un avantage du mode de réalisation de la figure 4 par rapport à celui de la figure 3 est qu'il permet de remplacer l'élément LLI(N), correspondant au cycle de transfert où est généré le signal sig1, par un élément LLI' (N), plutôt qu'un élément LLI(N+1), correspondant au cycle de transfert suivant le cycle de transfert où est généré le signal sig1, par un élément LLI'(N+1).

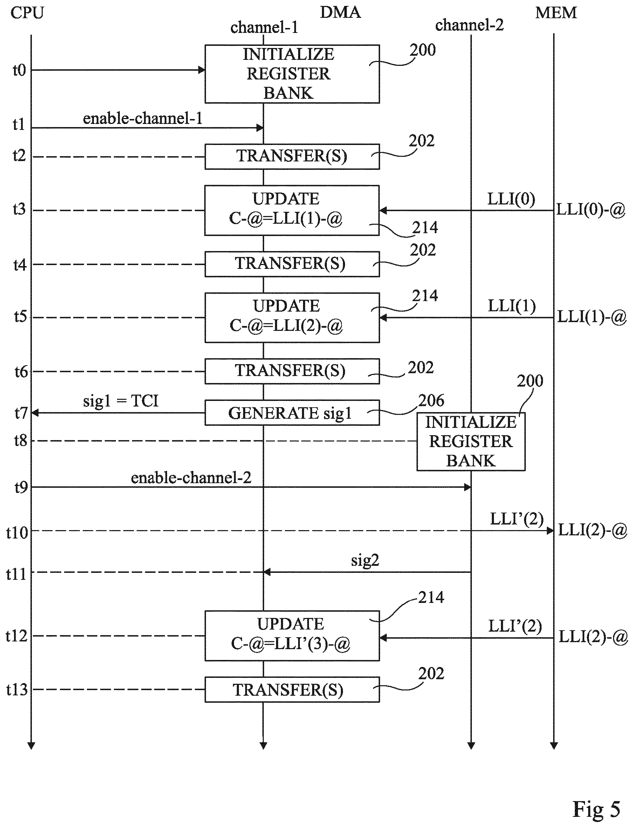

La figure 5 illustre un troisième mode de mise en oeuvre du procédé de la figure 2, qui fait partie de l'objet de la protection demandée, par le système 1 de la figure 1.

Dans ce troisième mode de mise en oeuvre, le champ C-sig1 et éventuellement un ou plusieurs autres champs de la banque de registres associée à chaque canal indiquent si un signal sig1 doit être généré lors du cycle de transfert courant, quel est le signal sig1 généré, et à quel moment du cycle doit être généré le signal sig1. En outre, dans ce troisième mode de mise en oeuvre, la banque de registres associée à chaque canal comprend le champ C-sig2 et éventuellement un ou plusieurs autres champs indiquant si un signal sig2 doit ou non être reçu pour poursuivre l'exécution d'un cycle de transfert correspondant, à quel moment d'un cycle de transfert est attendu ce signal sig2, et quel est ce signal sig2. Ainsi, on peut prévoir, à un cycle de transfert donné, qu'un signal sig1 soit envoyé à l'unité centrale 11 et que l'exécution des cycles de transfert soit interrompue jusqu'à la réception, par le circuit 14, d'un signal sig2 correspondant.

Plus particulièrement, dans ce troisième mode de mise en oeuvre, lorsque l'unité centrale 11 reçoit un signal sig1 d'un premier canal, et lorsque les cycles de transfert suivants sur ce premier canal doivent être modifiés, l'unité centrale 11 utilise un deuxième canal du circuit 14 pour enregistrer en mémoire un nouvel élément correspondant à un cycle de transfert suivant sur le premier canal, et pour générer le signal sig2 une fois le transfert terminé sur ce deuxième canal. Ainsi, dans ce troisième mode de mise en oeuvre, lorsque des cycles de transfert suivants sont modifiés, le signal sig2 n'est pas généré directement par l'unité centrale 11 mais par le circuit 14. Toutefois, l'unité centrale 11 déclenche la génération du signal sig2 en programmant de manière adaptée le deuxième canal.

A un instant t0, l'unité centrale 11 (CPU) programme la banque de registres du canal channel-1 (étape 200). En particulier, l'unité centrale 11 vient programmer le champ C-@ de la banque de registres de sorte que son contenu soit représentatif de l'adresse LLI(0)-@ de la mémoire 12 (MEM). L'adresse LLI(0)-@ correspond à l'adresse, dans la mémoire 12, d'un premier élément LLI(0) d'une première liste chaînée d'éléments LLI stockée dans la mémoire 12.

A un instant t1 suivant, l'unité centrale 11 fournit un signal enable-channel-1 au circuit 14 (DMA) qui active alors le canal channel-1.

Le circuit 14 lit alors le contenu de la banque de registres du canal channel-1, en particulier le champ C-sig1, pour vérifier si un signal sig1 doit être généré (étape 204 non illustrée), et si oui (étape 206 non illustrée), à quel moment du cycle de transfert courant. A partir de cette lecture du contenu de la banque de registres, le circuit 14 vérifie également, en particulier à partir de la lecture du champ C-sig2, si un signal sig2 doit être reçu (étape 208 non illustrée), et si oui (étape 209 non illustrée), à quel moment du cycle de transfert. Les signaux sig1 et sig2 peuvent donc être utilisés pour synchroniser des instants d'exécution d'une succession de cycles de transfert sur le canal channel-1 avec d'autres événements se produisant dans le système, notamment des cycles de transfert effectués sur un autre canal du circuit 14.

A titre d'exemple, on considère ici que pour le cycle de transfert courant, aucun signal sig1 ne doit être généré et aucun signal sig2 n'est attendu pour poursuivre l'exécution des cycles de transfert sur le canal channel-1.

Le circuit 14 effectue alors, à partir d'un instant suivant t2, le ou les transferts de données (étape 202) paramétrés par le contenu courant de la banque de registres associée au canal channel-1. A titre d'exemple, lors de ce premier cycle de transfert de l'application, le transfert de donnée est un transfert nul.

Le circuit 14 détermine ensuite si le cycle de transfert courant est le dernier cycle de transfert de l'application ou non (étape 210 non illustrée).

Dans cet exemple, le cycle de transfert courant n'est pas le dernier cycle de transfert de l'application. Ainsi, à un instant suivant t3, le circuit 14 met à jour la banque de registres (étape 214) à partir de l'élément LLI(0) lu dans la mémoire 12, à l'adresse LLI(0)-@ indiquée par le champ C-@. Dans cet exemple, après l'étape 214, le champ C-@ de la banque de registres indique l'adresse LLI(1)-@ en mémoire 12 de l'élément LLI(1) suivant de la première liste LLI ("C-@=LLI(1)-@").

Le circuit 14 lit ensuite le contenu de la banque de registres du canal channel-1 pour vérifier si un signal sig1 doit être généré (étape 204 non illustrée), et si oui (étape 206 non illustrée), à quel moment du cycle de transfert courant, et pour vérifier si un signal sig2 doit être reçu (étape 208 non illustrée), et si oui (étape 209 non illustrée), à quel moment du cycle de transfert.

A titre d'exemple, on considère ici que pour le cycle de transfert courant, aucun signal sig1 ne doit être généré et aucun signal sig2 n'est attendu pour poursuivre l'exécution des cycles de transfert sur le canal channel-1.

Le circuit 14 effectue alors, à partir d'un instant suivant t4, le ou les transferts de données (étape 202) paramétrés par le contenu courant de la banque de registres associée au canal channel-1, c'est-à-dire ici par l'élément LLI(0) de la première liste LLI.

Le circuit 14 détermine ensuite si le cycle de transfert courant est le dernier cycle de transfert de l'application ou non (étape 210 non illustrée). Dans cet exemple, le cycle de transfert courant n'est pas le dernier cycle de transfert de l'application et, à un instant t5 suivant, le circuit 14 met à jour la banque de registres (étape 214) à partir de l'élément LLI(1) lu dans la mémoire 12, à l'adresse LLI(1)-@ indiquée par le champ C-@. Dans cet exemple, après l'étape 214, le champ C-@ de la banque de registres indique l'adresse LLI(2)-@ en mémoire 12 de l'élément LLI(2) suivant de la première liste LLI ("C-@=LLI(2)-@").

Le circuit 14 lit ensuite le contenu de la banque de registres du canal channel-1 pour vérifier si un signal sig1 doit être généré (étape 204 non illustrée), et si oui (étape 206 non illustrée), à quel moment du cycle de transfert courant, et pour vérifier si un signal sig2 doit être reçu (étape 208 non illustrée), et si oui (étape 209 non illustrée), à quel moment du cycle de transfert. A titre d'exemple, on considère ici que pour le cycle de transfert courant, un signal sig1 doit être généré à destination de l'unité centrale 11, à la fin de l'étape de transfert 202, et qu'un signal sig2 doit être reçu, avant l'étape 210, pour poursuivre l'exécution des cycles de transfert sur le canal channel-1.

Ainsi, à un instant t6 suivant, le circuit 14 effectue, sur le canal channel-1, le ou les transferts de données (étape 202) paramétrés par le contenu courant de la banque de registres, c'est-à-dire, dans cet exemple, par l'élément LLI(1) de la première liste LLI.

A un instant t7 suivant, le circuit 14 génère le signal sig1 à destination de l'unité centrale 11 (étape 206), dans cet exemple le signal TCI. Puis le circuit 14 attend de recevoir le signal sig2 avant de mettre en oeuvre l'étape 210. Autrement dit, l'exécution des cycles de transfert sur le canal channel-1 est suspendue jusqu'à la réception du signal sig2. De préférence, lors de la génération du signal sig1, le circuit 14 ne désactive pas le canal channel-1.

Lorsque l'unité centrale 11 reçoit le signal sig1, elle détermine, en fonction de l'état du système 1, si des cycles suivants de transfert sur le canal channel-1 sont ceux correspondant à la première liste LLI, ou si d'autres cycles de transfert que ceux de la liste LLI doivent être mis en oeuvre. On considère ici, à titre d'exemple, le cas où d'autres cycles de transfert que ceux de la première liste LLI doivent être mis en oeuvre.

A un instant t8 suivant, l'unité centrale 11 vient initialiser un autre canal, ici le canal channel-2, du circuit 14, c'est-à-dire programmer la banque de registres associée au canal channel-2 (étape 200 pour le canal channel-2). Plus particulièrement, l'unité centrale 11 programme cette banque de registres de sorte que le canal channel-2 mette en oeuvre un transfert, vers la mémoire 12, à l'adresse LLI(2)-@, d'un élément LLI' (2). L'adresse LLI(2)-@ est par exemple obtenue par l'unité centrale lors d'une lecture du champ C-@ de la banque de registres associée au canal channel-1. En outre, de préférence, l'élément LLI' (2) est le premier élément d'une deuxième liste chaînée d'éléments LLI'. Dans ce cas, les autres éléments de la liste LLI' sont de préférence enregistrés en mémoire 12 en même temps que l'élément LLI' (2) .

En outre, l'unité centrale 11 programme le champ C-sig1 et éventuellement un ou plusieurs autres champs de la banque de registres associée au canal channel-2 de sorte que, une fois le transfert de l'élément LLI'(2) vers la mémoire 12 terminé, le circuit 14 génère un signal sig1 associé au canal channel-2. Plus particulièrement, le signal sig1 associé au canal channel-2 est ici le signal sig2 attendu par le canal channel-1, l'unité centrale 11 ayant pris connaissance du signal sig2 attendu par le canal channel-1, par exemple lors de la lecture de la banque de registres associée au canal channel-1.

A un instant t9 suivant, l'unité centrale fournit un signal enable-channel-2 au circuit 14 qui active alors le canal channel-2.

Le circuit 14 lit ensuite le contenu de la banque de registres associée au canal channel-2 et constate qu'un signal sig1 doit être généré pour le cycle de transfert en cours sur le canal channel-2, que ce signal sig1 est le signal sig2 du canal channel-1, et que ce signal sig1 doit être généré une fois l'élément LLI' (2) transféré en mémoire via le canal channel-2.

Ainsi, à un instant t10 suivant, le circuit 14 effectue le transfert de l'élément LLI' (2) en mémoire, à l'adresse LLI(2)-@.

A un instant t11 suivant, le circuit 14 génère le signal sig1 associé au canal channel-2, c'est-à-dire le signal sig2 attendu par le canal channel-1.

A un instant t12 suivant, après la réception du signal sig2 par le circuit 14, et après avoir déterminé que le cycle de transfert courant du canal channel-1 n'est pas le dernier de l'application utilisant ce canal (étape 210 non illustrée), le circuit 14 met à jour la banque de registres associée au canal channel-1 (étape 214). Plus particulièrement, le circuit 14 met à jour cette banque de registres à partir de l'élément LLI' (2) lu en mémoire 12, à l'adresse LLI(2)-@ indiquée par le champ C-@ de cette banque de registres. Après la mise à jour, dans cet exemple, le champ C-@ indique l'adresse LLI'(3)-@, en mémoire 12, d'un élément suivant de la liste LLI' dont le premier élément est l'élément LLI' (2) ("C-@=LLI'(3)-@").

Le circuit 14 lit ensuite le contenu de la banque de registres du canal channel-1 pour vérifier si un signal sig1 doit être généré (étape 204 non illustrée), et si oui (étape 206 non illustrée), à quel moment du cycle de transfert courant, et pour vérifier si un signal sig2 doit être reçu (étape 208 non illustrée), et si oui (étape 209 non illustrée), à quel moment du cycle de transfert. A titre d'exemple, on considère ici que pour le cycle de transfert courant, aucun signal sig1 ne doit être généré et aucun signal sig2 n'est attendu pour poursuivre l'exécution des cycles de transfert sur le canal channel-1.

A un instant t13 suivant, le circuit 14 effectue, sur le canal channel-1, le ou les transferts de données (étape 202) paramétrés par le contenu courant de la banque de registres associée au canal channel-1, c'est-à-dire ici par l'élément LLI'(2).

Dans ce troisième mode de mise en oeuvre, l'unité centrale 11 ne modifie pas le contenu de la banque de registres associée au canal channel-1 pour modifier l'exécution, sur le canal channel-1, des cycles de transfert d'une application. Ainsi, le canal channel-1 reste actif et alloué durant toute l'exécution de l'application.

En outre, par rapport aux premier et deuxième modes de mise en oeuvre, dans le troisième mode de mise en oeuvre, les champs C-sig1 et C-sig2 peuvent être également utilisés pour synchroniser l'exécution de cycles de transfert sur un canal avec des événements se produisant dans le système 1, en plus de leur utilisation pour modifier, à au moins un cycle de transfert, en fonction de l'état du système 1, la succession de cycles de transfert en cours d'exécution sur un canal.

Par ailleurs, dans ce troisième mode de réalisation, l'unité centrale 11 n'a pas à accéder à la mémoire pour y insérer un élément LLI' (N) remplaçant un élément LLI(N) de programmation du canal channel-1, l'accès en mémoire étant effectué par le canal auxiliaire channel-2. Autrement dit, l'unité centrale 11 n'a pas à gérer d'accès en mémoire et les contraintes temporelles qui peuvent être liées à cet accès en mémoire. On s'assure toutefois, grâce au signal sig2 émis par le canal auxiliaire channel-2, que l'exécution de l'application à laquelle est alloué le canal channel-1 ne peut reprendre qu'une fois que le canal channel-2 a écrit en mémoire l'élément de liste chaînée conditionnant le transfert suivant de cette application.

Bien que cela n'ait pas été illustré en figure 5, dans le cas où, après avoir reçu le signal sig1 (instant t7), l'unité centrale 11 détermine, en fonction de l'état du système 1, que les prochains cycles de transfert à mettre en oeuvre sont ceux de la première liste LLI, l'unité centrale initialise le canal channel-2 pour que le transfert effectué à l'instant t10 soit un transfert nul mais que le signal sig2 attendu par le canal channel-1 soit tout de même généré par le canal channel-2 à la fin de ce transfert nul. Dans ce cas, l'élément LLI(2) de la liste LLI, enregistré à l'adresse LLI(2)-@ n'est pas remplacé par un élément LLI'(2).

Bien cela n'ait pas été décrit en relation avec les figures 2, 3 et 4, lorsque tout ou partie du contenu d'une banque de registres est mise à jour à partir d'un élément d'une liste chaînée d'éléments, cet élément comprend des informations représentatives de la mise à jour de toute ou partie des champs de la banque de registres, notamment des champs C-param déterminant le ou les transferts de données du cycle de transfert suivant.

En particulier, on a décrit des premier et deuxième modes de mise en oeuvre dans lesquels le contenu du champ C-sig1 peut être différent entre deux cycles de transfert d'une succession de cycles de transfert effectuée sur un canal, c'est-à-dire que, pour chaque cycle, l'exécution peut ou non être suspendue en fonction du contenu du champ C-sig1. On peut prévoir que le contenu du champ C-sig1 soit identique pour tous les cycles de transfert d'une application, par exemple si le champ C-sig1 appartient à un registre statique d'une banque de registres de configuration correspondante, et que le contenu de ce registre statique ne peut pas être modifié lors d'une mise à jour de la banque de registres à partir de la mémoire. Dans cette variante, en fonction du champ C-sig1, l'exécution des cycles de transfert de l'application est par exemple interrompue à chaque cycle de transfert, ou n'est par exemple jamais interrompue.

Par ailleurs, les premier et deuxième modes de mise en oeuvre peuvent s'appliquer à un circuit 14 ne comprenant qu'un seul canal.

Enfin, la mise en oeuvre pratique des modes de réalisation et variantes décrits est à la portée de l'homme du métier à partir des indications fonctionnelles données ci-dessus. En particulier, l'homme du métier est en mesure de déterminer la structure de données de chaque élément d'une liste chaînée d'éléments, et/ou le nombre et la taille des registres d'une banque de registres de configuration à partir des indications fonctionnelles données ci-dessus. Par ailleurs, l'homme du métier est en mesure de mettre en oeuvre les modes de réalisation décrits dans d'autres systèmes que le système 1 de la figure 1.

## Revendications

1. Procédé mis en oeuvre par un système (1) comprenant un circuit d'accès direct en mémoire (14), une unité centrale de traitement (11) et une mémoire (12), le procédé comprenant :
a) initialiser (200) une banque de registres d'un canal (channel-1) du circuit d'accès direct en mémoire ;
b) exécuter des cycles de transfert sur ledit canal (channel-1), chacun desdits cycles comprenant au moins un transfert de données (202) configuré par un contenu de la banque de registres, et une mise à jour (214) du contenu de la banque de registres à partir d'un élément enregistré en mémoire, à une adresse indiquée par un deuxième champ (C-@) de la banque de registres ;
c) à chacun desdits cycles, en fonction d'au moins un premier champ (C-sig1) de la banque de registres, c1) lorsque le premier champ indique qu'aucun premier signal ne doit être généré poursuivre l'exécution des cycles de transfert sur ledit canal et c2) lorsque le premier champ indique que le premier signal doit être généré générer (206) le premier signal (sig1) et suspendre l'exécution des cycles de transfert sur ledit canal ;
d) à chaque réception du premier signal (sig1) par l'unité centrale (14), en fonction d'un état du système, d1) lorsque le système est dans un premier état générer un deuxième signal (sig2), et d2) lorsque le système est dans un deuxième état différent du premier état enregistrer dans la mémoire un premier élément (LLI' (N+1) ; LLI'(N) ; LLI' (2)) représentatif d'une mise à jour suivante de la banque de registres, puis générer le deuxième signal (sig2) ; et
e) à chaque réception du deuxième signal par le circuit d'accès direct en mémoire, poursuivre l'exécution desdits cycles de transfert sur ledit canal,
dans lequel, à l'étape d2), l'unité centrale (11) programme un autre canal (channel-2) du circuit d'accès direct en mémoire (14) pour que ledit autre canal enregistre dans la mémoire (12) ledit premier élément (LLI'(2)) et génère le deuxième signal (sig2) après l'enregistrement dudit premier élément (LLI'(2)) dans la mémoire (12).

2. Procédé selon la revendication 1, dans lequel l'étape a) comprend une programmation de la banque de registres par l'unité centrale (11).

3. Procédé selon la revendication 1 ou 2, dans lequel, à l'étape d2), l'unité centrale (11) lit le deuxième champ (C-@) de la banque de registres, ledit deuxième champ indiquant une première adresse (LLI(2)-@) de la mémoire (12) à laquelle est enregistré un deuxième élément (LLI(2)) représentatif d'une mise à jour suivante de la banque de registres.

4. Procédé selon la revendication 3, dans lequel, à l'étape d2), l'unité centrale (11) programme le deuxième canal (channel-2) pour que ledit premier élément (LLI'(2)) soit enregistré à ladite première adresse (LLI(2)-@).

5. Procédé selon l'une quelconque des revendications 1 à 4, dans lequel le premier signal (sig1) est généré par le circuit d'accès direct en mémoire (14).

6. Procédé selon l'une quelconque des revendications 1 à 5, dans lequel le premier élément (LLI' (N+1) ; LLI' (N) ; LLI'(2)) est l'élément initial d'une liste chaînée d'éléments (LLI'), et, de préférence, chaque élément de ladite liste suivant l'élément initial est enregistré dans la mémoire (12) lors de l'étape d2).

7. Système électronique (1) comprenant une mémoire (12), une unité centrale de traitement (11) et un circuit d'accès direct en mémoire (14) comportant au moins un canal de transfert de données, le système étant configuré pour mettre en oeuvre le procédé selon l'une quelconque des revendications 1 à 6.

## Patentansprüche

1. Verfahren, das von einem System (1) implementiert wird, das eine Direktspeicherzugriffsschaltung (14), eine zentrale Verarbeitungseinheit (11) und einen Speicher (12) aufweist, wobei das Verfahren Folgendes aufweist:
a) Initialisieren (200) einer Registerbank eines Kanals (Kanal-1) der Direktspeicherzugriffsschaltung;
b) Ausführen von Übertragungszyklen über den Kanal (Kanal-1), wobei jeder der Zyklen mindestens eine Datenübertragung (202) aufweist, die durch einen Inhalt der Registerbank konfiguriert ist, und eine Aktualisierung (214) des Inhalts der Registerbank ausgehend von einem im Speicher gespeicherten Element; und zwar an einer Adresse, die mittels eines zweiten Feldes (C-@) der Registerbank angegeben ist;
c) bei jedem der Zyklen, und zwar gemäß mindestens einem ersten Feld (C-sig1) der Registerbank, c1) wenn das erste Feld anzeigt, dass kein erstes Signal erzeugt werden muss, Fortsetzen der Ausführung der Übertragungszyklen über die Kanäle, und c2) wenn das erste Feld anzeigt, dass das erste Signal erzeugt werden muss, Erzeugen des ersten Signals (sig1) (206) und Aussetzen der Ausführung der Übertragungszyklen über den Kanal;
d) bei jedem Empfang des ersten Signals (sig1) durch die zentrale Verarbeitungseinheit (14), und zwar entsprechend einem Zustand des Systems, d1) wenn sich das System in einem ersten Zustand befindet, Erzeugen eines zweiten Signals (sig2), und d2) wenn sich das System in einem zweiten Zustand befindet, der sich von dem ersten Zustand unterscheidet, Aufzeichnen eines ersten Elements (LLI'(N+1); LLI'(N); LLI'(2)) in den Speicher, das für eine nächste Aktualisierung der Registerbank repräsentativ ist, und dann Erzeugen des zweiten Signals (sig2), und
e) bei jedem Empfang des zweiten Signals durch die Direktspeicherzugriffsschaltung, Fortsetzen der Ausführung der Übertragungszyklen über den Kanal,
wobei im Schritt d2) die zentrale Verarbeitungseinheit (11) einen anderen Kanal (Kanal-2) der Direktspeicherzugriffsschaltung (14) so programmiert, dass der andere Kanal das erste Element (LLI'(2)) in den Speicher (12) aufzeichnet und das zweite Signal (sig2) nach dem Aufzeichnen des ersten Elements (LLI'(2)) in den Speicher (12) erzeugt.

2. Verfahren nach Anspruch 1, wobei Schritt a) eine Programmierung der Registerbank durch die zentrale Verarbeitungseinheit (11) aufweist.

3. Verfahren nach Anspruch 1 oder 2, wobei in Schritt d2) die zentrale Verarbeitungseinheit (11) das zweite Feld (C-@) der Registerbank liest, wobei das zweite Feld eine erste Adresse (LLI(2)-@) im Speicher (12) angibt, an der ein zweites Element (LLI(2)), das eine nächste Aktualisierung der Registerbank darstellt, aufgezeichnet wird.

4. Verfahren nach Anspruch 3, wobei in Schritt d2) die zentrale Verarbeitungseinheit (11) den zweiten Kanal (Kanal-2) so programmiert, dass das erste Element (LLI'(2)) an der ersten Adresse (LLI(2)-@) aufgezeichnet wird.

5. Verfahren nach einem der Ansprüche 1 bis 4, wobei das erste Signal (sig1) von der Direktspeicherzugriffsschaltung (14) erzeugt wird.

6. Verfahren nach einem der Ansprüche 1 bis 5, wobei das erste Element (LLI'(N+1); LLI'(N); LLI'(2)) das Anfangselement einer verknüpften Liste von Elementen (LLI') ist und wobei vorzugsweise jedes Element der Liste, das dem Anfangselement folgt, im Schritt d2) in dem Speicher (12) aufgezeichnet wird.

7. Elektronisches System (1), das Folgendes aufweist:
einen Speicher (12), eine zentralen Verarbeitungseinheit (11) und eine Direktspeicherzugriffsschaltung (14), die mindestens einen Datenübertragungskanal aufweist, wobei das System eingerichtet ist, das Verfahren nach einem der Ansprüche 1 bis 6 zu implementieren.

## Claims

1. A method implemented by a system (1) comprising a direct memory access circuit (14), a central processing unit (11), and a memory (12), the method comprising:
a) initializing (200) a register bank of a channel (channel-1) of the direct memory access circuit;
b) executing transfer cycles over said channel (channel-1), each of said cycles comprising at least one data transfer (202) configured by a content of the register bank, and an update (214) of the content of the register bank from an item recorded into memory, at an address indicated by a second field (C-@) of the register bank;
c) at each of said cycles, according to at least one first field (C-sig1) of the register bank, c1) when the first field indicates that no first signal has to be generated carrying on the execution of the transfer cycles over said channels and c2) when the first field indicates that the first signal has to be generated generating (206) the first signal (sig1) and suspending the execution of the transfer cycles over said channel;
d) at each reception of the first signal (sig1) by the central processing unit (14), according to a state of the system, d1) when the system is in a first state generating a second signal (sig2), and d2) when the system is in a second state different from the first state recording into the memory a first item (LLI'(N+1); LLI'(N); LLI'(2)) representative of a next update of the register bank, and then generating the second signal (sig2); and
e) at each reception of the second signal by the direct memory access circuit, carrying on the execution of said transfer cycles over said channel,
wherein, at step d2), the central processing unit (11) programs another channel (channel-2) of the direct memory access circuit (14) so that said other channel records into the memory (12) said first item (LLI'(2)) and generates the second signal (sig2) after the recording of said first item (LLI'(2)) into the memory (12).

2. The method of claim 1, wherein step a) comprises a programming of the register bank by the central processing unit (11).

3. The method of claim 1 or 2, wherein, at step d2), the central processing unit (11) reads the second field (C-@) of the register bank, said second field indicating a first address (LLI(2)-@) in the memory (12) at which a second item (LLI(2)) representative of a next update of the register bank is recorded.

4. The method of claim 3, wherein, at step d2), the central processing unit (11) programs the second channel (channel-2) so that said first item (LLI' (2)) is recorded at said first address (LLI(2)-@).

5. The method of any of claims 1 to 4, wherein the first signal (sig1) is generated by the direct memory access circuit (14) .

6. The method of any of claims 1 to 5, wherein the first item (LLI' (N+1); LLI' (N); LLI' (2)) is the initial item of a linked list of items (LLI') and, preferably, each item of said list following the initial item is recorded into the memory (12) at step d2).

7. An electronic system (1) comprising a memory (12), a central processing unit (11), and a direct memory access circuit (14) comprising at least one data transfer channel, the system being configured to implement the method of any of claims 1 to 6.
